(19) Europäisches Patentamt
European Patent Office
Office européen des brevets

(11) Publication number: 0 018 131
B1

(12) **EUROPEAN PATENT SPECIFICATION**

(45) Date of publication of patent specification: 26.01.83

(51) Int. Cl.³: C 08 B 37/08, B 01 J 43/00

(21) Application number: 80301032.1

(22) Date of filing: 01.04.80

(54) **Crosslinked, carboxyalkylated and deacetylated derivative of chitin, process for preparation thereof, and use thereof as an adsorbent material.**

(30) Priority: 06.04.79 JP 41812/79

(43) Date of publication of application:
29.10.80 Bulletin 80/22

(45) Publication of the grant of the patent:
26.01.83 Bulletin 83/4

(84) Designated Contracting States:
DE FR GB IT NL SE

(56) References cited:
DE - C - 858 696

CHEMICAL ABSTRACTS, vol. 91, 1979 no. 5, July 30, ref. 35063d
Columbus, Ohio, US
MUZZARELLI et al.: "Modified chitosans and their chromatographic performances"

(73) Proprietor: KUREHA KAGAKU KOGYO KABUSHIKI KAISHA
8 Horidome-cho, 1-chome Nihonbashi
Chuo-ku Tokyo (JP)

(72) Inventor: Koshugi, Junichi
No.22 Daiichi-Kurehasoh
3-10-13 Nerima, Nerima-Ku Tokyo (JP)

(74) Representative: Myerscough, Philip Boyd et al,
J.A.Kemp & Co. 14, South Square Gray's Inn
London, WC1R 5EU (GB)

EP 0 018 131 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Crosslinked, carboxyalkylated and deacetylated derivative of chitin, process for preparation thereof, and use thereof as an adsorbent material

The present invention relates to novel crosslinked, carboxylated and deacetylated derivative of chitin, to a process for its preparation from natural chitin or generated chitin, and to its use as an adsorbent material.

Fiber-forming polysaccharides occurring in nature can be divided broadly into collagen in higher animals, chitin in arthropods and in lower plants and cellulose in higher plants. The skeletal systems of living things are made by sedimentation of apatite, calcium carbonate or lignin onto these polysaccharides.

Chitin is a mucopolysaccharide of poly-N-acetyl-D-glucosamine and occurs in large amounts in nature. However, since chitin is highly crystalline and its intermolecular bonding through acetylamino groups is extremely stable, it is very difficult to find an appropriate solvent to dissolve, disperse or swell chitin satisfactorily. Accordingly, development of the use of chitin resources is far behind of that of cellulose and other polysaccharides.

In EPA 79303066.9, filed 28th December 1979, we describe a method for preparing a carboxyalkylated chitin which is water-soluble. Also in Japanese Patent Application Shou 53—161389 (1978) we disclose a method by which variously shaped materials, such as membranes, having amphoteric ion-exchangeability can be prepared from the water-soluble carboxyalkylated chitin. However, since in the outer portions of those shaped materials, a large part of the amino groups are acylated, the materials are not sufficiently amphoteric. Furthermore, since the outer surface of a membrane has a molecular sieve effect, it cannot allow a high-polymer such as a protein to permeate through the membrane into the inner part, and accordingly there are cases where its amphoteric ion-exchangeability or its adsorbing capability are not sufficient.

The present invention provides a novel polymeric substance which is a crosslinked, carboxyalkylated and deacetylated derivative of chitin having a degree of cross-linking of 0.01 to 0.3, a degree of carboxyalkylating substitution of 0.1 to 0.9, and a degree of deacetylation of 0.1 to 1. This substance is insoluble in aqueous solutions of acids, bases and neutral salts and has carboxylic group(s) which may provide anion(s) and amino group(s) which may provide cation(s).

The invention also provides a process for preparing a cross-linked polymeric substance characterised by (a) cross-linking natural chitin or regenerated chitin with a cross-linking agent, (b) carboxyalkylating the cross-linked chitin with an etherifying agent having a halogen atom and a carboxyl group and (c) de-acetylating the cross-linked carboxyalkylated chitin, thereby to provide a cross-linked polymeric substance having a degree of cross-linking of 0.01 to 0.3, a degree of carboxyalkylating substitution of 0.1 to 0.9 and a degree of de-acetylation of 0.1 to 1.0.

The chitin used as a starting material in the process of the present invention can be obtained by any suitable method from natural substances which contain it. After crushing, the chitin can be immersed in an aqueous alkali solution having a normality of 10 to 15. The alkali preferably is sodium hydroxide, potassium hydroxide or lithium hydroxide. The amount of the aqueous alkali solution is preferably 3 to 5 times by weight of the amount of chitin. The temperature of the aqueous solution is preferably lower than room temperature, more preferably from 5 to 20°C.

Then, in order to make the crosslinking of chitin easier, the excess aqueous alkali solution can be removed from the chitin, or the mixture containing chitin can be subjected to freezing. The freeze-treatment of the immersed chitin opens or swells the chitin micells and alkali is retained within the micells to assist in the cross-linking reaction.

In the freezing step, the mixture of chitin and the alkali preferably is frozen at a temperature of —3 to —30°C, more preferably of —10 to —20°C, preferably for 3 to 24 hours. The degree of swelling of the micells of chitin is determined by taking up a small specimen amount and dissolving it in a small amount of an iced water to see the uniformity of the thus-obtained solution. In the case of fully swelled micells, the chitin is uniformly dispersed in the water.

Where the concentration or amount of alkali are outside the above-mentioned ranges, the micells are only partially swollen or opened and a non-uniform and opaque solution results. It is considered that where there is insufficient alkali, it is not posible for the alkali to permeate into the interior of the chitin particles. On the other hand, when too much alkali is used, it is present at the surface of the chitin particles and only the surface is frozen in the freezing treatment. As a result, internal swelling of the chitin particles is suppressed and they do not open fully.

The cross-linking reaction (a) suitably is carried out by mixing a cross-linking agent in an amount of 0.1 to 3 times, preferably 0.5 to 2 times, based on molecular weight, the amount of the chitin starting material expressed in terms of the pyranose ring of the chitin, preferably the above-mentioned chitin from which excess aqueous alkali solution has been removed or which has been subjected to the freezing treatment. The mixing of the chitin and the cross-linking agent suitably is carried out at a temperature below room temperature, preferably below 0°C for 5 to 48 hours.

Preferred crosslinking agents are those of the general formula:

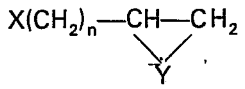 or 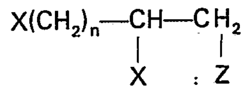

wherein X represents a halogen atom; Y represents an oxygen or a sulfur atom; Z represents a hydroxyl or a thiol group, and n is 1, 2 or 3. Examples of these cross-linking agents are epichlorhydrin, 1-bromo-3,4-epoxybutane, 1-bromo-4,5-epoxypentane, 1-chloro-2,3-epithiopropane, 1-bromo-2,3-epithiopropane, 1-bromo-3,4-epithiobutane, 1-bromo-4,5-epithiopentane, 2,3-dibromopropanol, 2,4-dibromobutanol, 2,5-dibromopentanol, 2,3-dibromopropanethiol, 2,4-dibromobutanethiol and 2,5-dibromopentanethiol. Of these it is preferred to use epichlorohydrin, 2,3-dibromopropanol and 1-chloro-2,3-epithiopropane.

An example of crosslinked chitin which may be obtained as a result of step (a) of the process of the invention can be represented by the general formula:

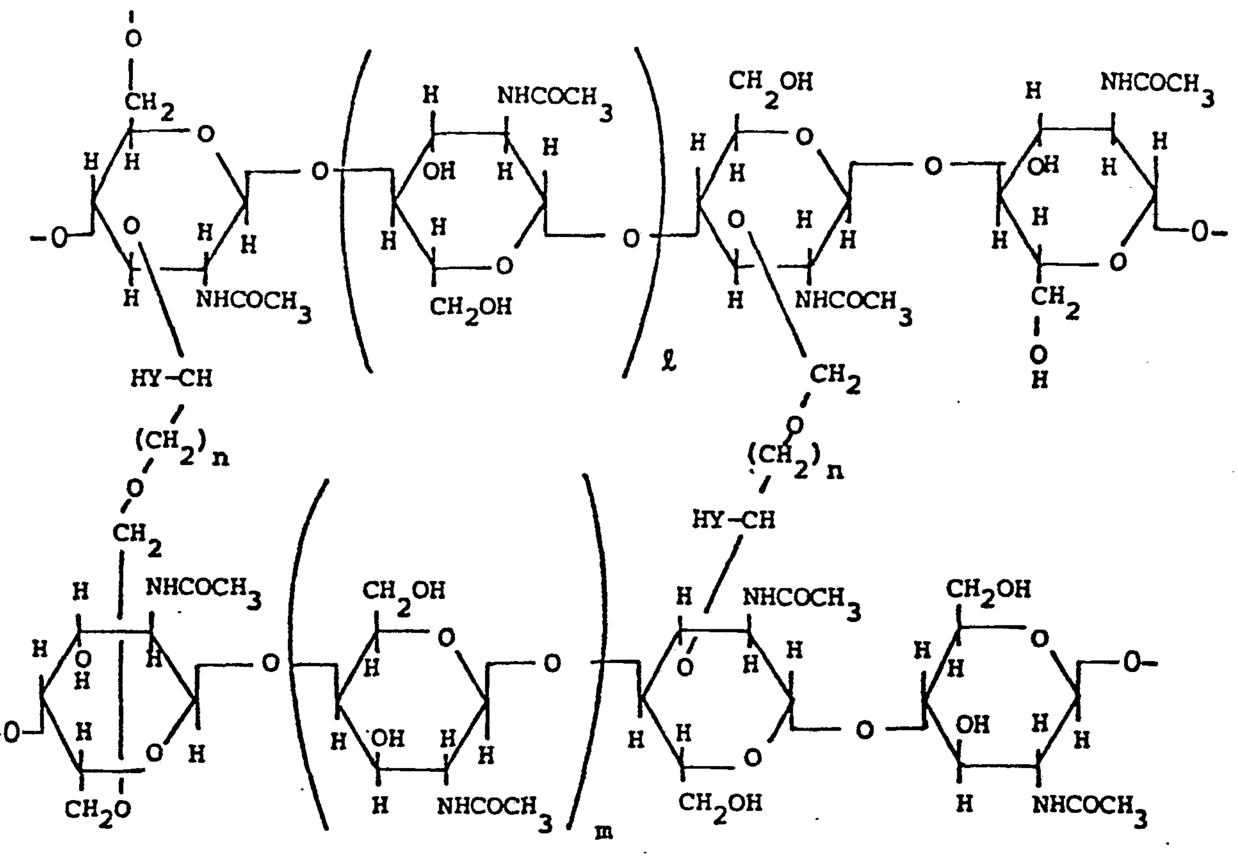

wherein l and m are each integers, and Y and n are as hereinbefore defined.

When the preferred cross-linking agents are used the crosslinked chitin contains as cross-linking groups the divalent group

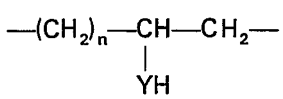 or 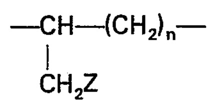

between oxygen bonded to the 6-position of one pyranose ring (or N-acetyl-D-glucosamine unit) and oxygen bonded to the 3-position of another pyranose ring, between the oxygen atoms respectively bonded to the 6-positions of two pyranose rings, or between the oxygen atoms respectively bonded to the 3-positions of two pyranose rings.

As is clearly seen from the above structural formula, cross-linking involves, as in the carboxyalkylation which is described later, either an —OH group or a —$CH_2OH$ group of chitin. This can be utilised to determine the degree of cross-linking. The degree of cross-linking in the present invention is 0.01 to 0.3 per N-acetyl-D-glucosamine unit. The term "degree of cross-linking" refers to the reacted amount of cross-linking agent and this can be determined by elementary analysis.

In preparing the cross-linked carboxyalkylchitin in step (b) the above-mentioned alkali-containing cross-linked chitin can be dispersed in an organic solvent containing an etherifying agent and reacted at a temperature of 0 to 30°C for one to 72 hours, preferably 5 to 12 hours. Since in the initial stage there

is an evolution of heat due to neutralization it is preferable to keep the temperature at 0 to 10°C at first, and then at a predetermined temperature thereafter. After the reaction is over, the organic solvent is removed and the residue is dispersed in water. The resulting aqueous dispersion is neutralized, filtered, desalted and dried to obtain the cross-linked carboxyalkylchitin. The organic solvent used in step (b) preferably is at least one of methanol, ethanol, isopropyl alcohol, n-propanol, acetone and dimethylsulfoxide. The reason why such an organic solvent is used, is that in the process of the present invention, since the hydroxy groups of chitin are converted to alcoholate groups by the action of alkali, there is an advantage in carrying out the carboxyalkylation of the alkali-containing chitin as it is.

The etherifying agent used in the carboxyalkylation step (b) preferably is a compound represented by the general formula of $Q(CH_2)_mCOOH$, wherein Q represents a chlorine or a bromine atom, and m is 1, 2 or 3, and is exemplified by chloroacetic acid, bromoacetic acid, beta-chloropropionic acid, beta-bromopropionic acid, gamma-chlorobutyric acid and gamma-bromobutyric acid.

The amount of the etherifying agent in the reaction is preferably one to three times, based on molecular weight, the amount of the starting material, chitin, expressed in terms of the pyranose ring of the chitin.

After steps (a) and (b) of the process of the present invention, a water-insoluble derivative of chitin, such as cross-linked carboxymethylchitin, cross-linked carboxyethylchitin or crosslinked carboxylpropylchitin, is obtained. The degree of substitution by carboxyalkyl groups upon carboxyalkylation (hereinafter referred to as the degree of carboxyalkylating substitution) in step (b) can be determined at will by choosing the conditions, and it is generally 0.1 to 0.9, preferably 0.3 to 0.9, per N-acetyl-D-glucosamine unit. The degree of carboxyalkylating substitution can be determined from the elementary analytical data on the product and the titer of the salt-type chitin by aqueous hydrochloric acid at the pK value of 4.3.

The cross-linked polymeric substance, which constitutes the product of the process of the present invention, is obtained in step (c) by de-acetylation of the cross-linked carboxyalkylchitin. The deacetylation can be brought about with an aqueous highly-concentrated alkali solution, preferably an aqueous 4 to 15N alkali solution, at, for example, a temperature of 65 to 150°C, preferably of 65 to 110°C, for 0.1 to 48 hours.

The cross-linked carboxyalkylchitin used as the starting material in the de-acetylation step (c) may be a solvent-containing product from the carboxyalklyation step (b) obtained by filtering and washing with ethanol or acetone, a dried product or a product containing water.

During the de-acetylation reaction carboxyalkyl groups are not removed, even when the reaction involves heating in aqueous alkali solution, because they are bonded by ether-linkages.

The degree of de-acetylation of the product of de-acetylation can be determined by the values of the elementary analysis of the product and should be 0.1 to 1, preferably 0.3 to 1.

The properties of the cross-linked polymeric substance obtained by the process of the present invention have been confirmed by, for example, elementary analysis, infrared spectroscopy, colour reactions, chemical analysis and tests for solubilities as follows:

| | |
|---|---|
| a) degree of cross-linking: | 0.01 to 0.3; |
| b) degree of carboxyalkylating substitution: | 0.1 to 0.9; |
| c) degree of de-acetylation: | 0.1 to 1; |
| d) nitrogen content: | 5.3 to 8.3% by weight; |
| e) infrared absorption bands: | 1680 to 1720 $cm^{-1}$ and 1500 to 1530 $cm^{-1}$; |

f) colour reaction:
showing purple colour upon reaction with iodine in the presence of sulfuric acid; and

g) solubility:
insoluble in aqueous acid solutions, aqueous alkali solutions and aqueous salt solutions.

That is, in the infrared absorption spectrum of the cross-linked polymeric product of the present invention, an absorption band of 1680 to 1720 $cm^{-1}$ attributable to the carboxyl group and an absorption band of 1500 to 1530 $cm^{-1}$ attributable to the $NH_2$ group are recognized and the purple colour exhibited upon reaction with iodine in the presence of sulfuric acid indicates a de-acetylated product. The fact that the product is a cross-linked substance is verified by its insolubility in the aqueous solutions of acids, alkalis and salts.

The molecular weight of the cross-linked polymer having amphoteric ion-exchangeability, which the present invention provides, has not yet been accurately determined because there are no suitable solvents which are able to dissolve the polymer as it is (that is, without decomposition). Much the same is true of the raw material, chitin, (because of the chemical stability of chitin, there are no solvents which are able to dissolve chitin as it is) although there are reports that the molecular weight of chitin is from a few hundred thousands to a few millions.

The cross-linked polymeric substance according to the present invention has, as will be seen from the Examples, amphoteric ion-exchangeability and is chemically stable. Accordingly it may be used effectively as a filler of a column for the separation of sugar-protein, the separation of protein-protein,

the de-salting of raw sugar, and as a dialyzing material, and as an adsorbent for affinity chromatography.

The followings are the more detailed explanation of the present invention while referring to Examples:

Example 1

1—1) Preparation of crosslinked carboxymethylchitin:

After mixing and kneading 20 g of natural chitin with 80 g of an aqueous 11N sodium hydroxide solution at a temperature of 15°C, the kneaded mixture was frozen at a temperature of −20°C for 24 hours.

Then, the frozen material was dispersed in a solution of 20 g of epichlorhydrin in 200 ml of isopropyl alcohol and the dispersion was left at a temperature of 0°C for 24 hours during which time a cross-linking reaction took place. From the elementary analytical values of a small specimen of the thus obtained cross-linked product, it was determined that the degree of cross-linking of the product was 0.1. A solution of 30 g of chloracetic acid in 200 ml of isopropyl alcohol was slowly added to the above-mentioned dispersion of cross-linked chitin, and after 2 hours of reaction at a temperature of 0°C, the mixture was warmed to a temperature of 20°C and kept at the same temperature for 40 hours under agitation during which time a carboxymethylation reaction took place.

After the reaction was over, the solid matter, in the dispersion was separated by filtration and was re-dispersed in one liter of water. The solid matter was hardly soluble in water. After neutralizing the dispersion, the neutralizate was filtered, washed with water and de-salted to obtain an elastic gel. After washing the gel with ethanol, 28 g of white powder were obtained by drying the washed gel under reduced pressure. This white powder gave infrared absorption peaks of 1680, 1500, 1210 and 1190 $cm^{-1}$ and accordingly it was confirmed that the powder had been carboxymethylated. The degree of substitution with carboxymethyl groups was 0.7 as determined by elementary analysis.

On immersing one gram of this white powder in 500 g of an aqueous 5% by weight of sodium hydroxide solution, none of the powder dissolved. The cation exchange capacity of the white powder was 3.35 meq./g.

These results showed that the white powdery product was a cross-linked carboxymethylchitin.

1—2) Preparation of the novel crosslinked polymeric substance:

Ten grams of the white powdery carboxymethylchitin were treated with 100 g of an aqueous 12.5N sodium hydroxide solution at a temperature of 100°C for 3 hours. The reaction mixture was filtered, and the insoluble matter was removed and added to 500 ml of water. The insoluble matter in water scarcely dissolved even upon neutralization with 6N hydrochloric acid and a light yellow elastic gel was obtained from it. After de-salting the gel, it was freeze-dried to provide 8.5 g of a powdery product light yellow in colour.

Although the powdery product was immersed into 500 ml each of 10wt% aqueous sodium chloride solution and of 5wt% aqueous acetic acid solution, respectively for 24 hours at room temperature, no dissolution of the product was observed. Since a purple colour developed when the product was reacted with iodine in the presence of sulfuric acid, it was confirmed that de-acetylation has taken place. The degree of de-acetylation was found to be 0.9 according to the values of its elementary analysis. Furthermore, the presence of amine groups and carboxyl groups in the product were confirmed from its infrared absorption spectrum.

The cation exchange capability and the anion exchange capability of the product were respectively 3.8 and 5.0 meq./g according to batch operation. These results showed that the product was a cross-linked carboxymethylchitosan having an amphoteric ion exchangeability.

Example 2

The same reaction as in 1) of Example 1 was carried out except for using 20 g of 2,3-dibromopropanol instead of epichlorhydrin and ethanol instead of isopropyl alcohol. As a result, 26 g of an elastic and transparent gel were obtained. The degree of cross-linking of the product was 0.1, and its degree of substitution with carboxymethyl groups was 0.7.

The reaction product did not dissolve in aqueous 2N sodium hydroxide solution nor in aqueous 10% by weight sodium carbonate solution. The cation exchange capability of the product upon batch operation was 3.1 meq./g.

Next, after treating 10 g of the above-mentioned product with 100 g of an aqueous 14N sodium hydroxide solution at a temperature of 100°C for one hour, the same procedure as in 2) of Example 1 was carried out on the treated product.

8.0 g of a light yellow elastic gel showing infrared absorption bands of 1680, 1500, 1210 and 1190 $cm^{-1}$ were obtained. This product did not dissolve in aqueous solutions of acid, alkali or neutral salt. Its degree of de-acetylation was found to be 0.9.

The cation exchange capability and the anion exchange capability of the product were 3.8 and 4.8 meq./g, respectively. These results showed that the product was a novel cross-linked polymeric substance having an amphoteric ion exchangeability.

Example 3

Two similar reactions to that in 1) of Example 1 were carried out, but using (i) regenerated natural chitin instead of natural chitin, and (ii) 33 g of beta-chloropropionic acid or 37 g of gamm-chlorbutyric acid, respectively instead of 30 g of chloroacetic acid, to provide two reaction products. They were elastic and transparent gels.

Ten grams of each reaction product were subjected to de-acetylation by treatment with 100 g of an aqueous 14N sodium hydroxide solution at a temperature of 100°C for one hour. After the reaction was over, de-salting and freeze-drying were carried out on the reaction mixture to obtain a powdery product light yellow in colour.

The thus obtained product did not dissolve in aqueous 2N sodium hydroxide solution, hydrochloric acid or an aqueous sodium carbonate solution. The results of analyses of these products are shown in the following Table. As is seen from the Table, the products have an amphoteric ion exchangeability.

TABLE 1

Properties of Carboxylated Products

| Properties | Agent for carboxylation | |
|---|---|---|
| | beta-chloro-propionic acid | gamma-chloro-butyric acid |
| Yield (g) | 8.3 | 8.1 |
| Degree of crosslinking | 0.1 | 0.1 |
| Degree of substitution with carboxyalkyl groups | 0.6 | 0.5 |
| Degree of de-acetylation | 0.9 | 0.9 |
| Characteristic infrared absorption bands | | |
| 1680 $cm^{-1}$ | yes | yes |
| 1500 $cm^{-1}$ | yes | yes |
| 1210 $cm^{-1}$ | yes | yes |
| 1190 $cm^{-1}$ | yes | yes |
| Cation exchange capacity (meq./g) | 3.5 | 3.2 |
| Anion exchange capacity (meq./g) | 4.9 | 4.8 |

Example 4

The adsorption capacity of the cross-linked polymeric substance of the present invention obtained in Example 1 for saccharic substances such as glucose, fructose and dextran (of molecular weight 10,000), and for proteins such as bovine serum albumin and gamma-globulin (Fraction II) was examined using distilled water or a phosphate buffer solution of pH of 7.4 as the solvent.

In each examination, 50 ml of a saccharic substance solution (concentration of 500 ppm) or of a

protein solution (concentration of 200 ppm) was placed in a 100 ml-erlenmeyer flask, and a predetermined amount of the specimen (the cross-linked polymeric substance of the present invention) dispersed in the solvent was added to the flask and then, after shaking for 6 hours at room temperature, the infrared absorption and the ultraviolet absorption of the mixture were measured.

Adsorption of a saccharic substance was determined on one gram of the specimen (concentration of 20,000 ppm) and adsorption of proteins was determined on 0.05 g of the specimen (concentration of 1,000 ppm).

The results were:

(1) The cross-linked polymer did not adsorb any sugars; and

(2) the cross-linked polymer showed an adsorption capacity of 17 mg/g to albumin and gamma-globulin in the case of distilled water, and 9.4 and 58.4 mg/g to albumin and gamma-globulin, respectively, in the case of the phosphate buffer solution.

As is clearly seen from the above-mentioned results, by using the cross-linked polymeric substance of the present invention it is possible to separate sugars from proteins, and further, by changing the ionic strength of the solvent, it is possible to separate albumin from gamma-globulin.

Example 5

After dispersing the cross-linked polymeric substance of the present invention obtained in Example 1 into an aqueous 2wt% sodium chloride solution, the dispersion was poured into a column of 10 mm inner diameter and 200 mm high to provide a filled column, and then the column was washed with water purified by an ion-exchange resin until sodium chloride could not be detected in the washings.

Next, one ml of an aqueous solution of bovine serum albumin obtained by dissolving 1 mg of the albumin in 10 ml of distilled water was poured onto the column and then the column was developed with distilled water at a rate of 1 ml/min. However, no albumin was detected in the effluent. Thereupon, development was carried out using an aqueous 0.1N sodium chloride solution at the same rate. In this case, albumin was detected in the effluent.

Accordingly, it was found that the albumin adsorbed on the cross-linked polymeric substance of the present invention was easily desorbable with an aqueous solution of a neutral salt.

Example 6

By the same technique as in Example 5, a Column A was prepared to contain particles of the cross-linked polymeric substance of the present invention, prepared in Example 1.

For comparison a column B was prepared using an amphoteric ion exchange resin, AG 11A8 (manufactured by Bio-Rad Company), to fill another column of the same dimensions by the same technique as in Example 5, after which the de-salting technique was carried out.

As the test solution, one milligram of bovine serum fibrinogen and one milligram of bovine serum albumin were dissolved in 10 ml of an aqueous 0.1N sodium chloride solution.

After pouring the test solution into each of Columns A and B in an amount of one milliliter, the columns were developed with an aqueous 0.1N sodium chloride solution at a rate of one ml/min.

As a result:

(1) In Column A (filled with the cross-linked polymeric substance of the present invention), the mutual separation of fibrinogen and albumin was confirmed, while,

(2) in Column B (filled with AG 11A8), it was impossible to separate fibrinogen and albumin.

Example 7

A uniform solution was obtained by dissolving 2 g of chitin in 200 g of formic acid of purity of 99% at a temperature of 10°C, and the solution was de-foamed. The solution was poured onto a glass plate provided with frames and the glass plate with the solution was immersed in an ethanol bath to substitute the solvent. The plate was then washed with running water for 24 hours to provide a film of chitin.

After removing free water from the film by centrifugation, the film was immersed in an aqueous 40wt% sodium hydroxide solution, and after 3 times changing the sodium hydroxide solution the film was subjected to successive cross-linking, carboxymethylating and de-acetylating reactions as in Example 1. The elementary analytical data of the thus treated film were: 49.0wt% of carbon, 6.3wt% of hydrogen, 7.3wt% of nitrogen and the balance of oxygen. The above-mentioned data and the infrared spectroscopical analysis of the film confirmed that the film is a formed body comprising the cross-linked polymeric substance of the present invention having a degree of carboxymethylation of 0.7, a degree of deacetylation of 0.9 and a degree of cross-linking of 0.1.

**Claims**

1. A cross-linked, carboxyalkylated and deacetylated derivative of chitin having a degree of cross-linking of 0.01 to 0.3, a degree of carboxyalkylating substitution of 0.1 to 0.9, and a degree of deacetylation of 0.1 to 1.

2. A process for preparing a cross-linked polymeric substance characterised by (a) cross-linking natural chitin or regenerated chitin with a cross-linking agent, (b) carboxyalkylating the cross-linked chitin with an etherifying agent having a halogen atom and a carboxyl group and (c) de-acetylating the cross-linked carboxyalkylated chitin, thereby to provide a cross-linked polymeric substance having a degree of cross-linking of 0.01 to 0.3, a degree of carboxyalkylating substitution of 0.1 to 0.9 and a degree of de-acetylation of 0.1 to 1.0.

3. A process according to claim 2 characterised in that the cross-linking agent used in step (a) is of the formula

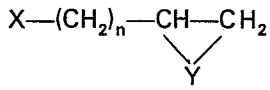

or $X—(CH_2)_n—CHX—CH_2Z$, wherein X is a halogen atom; Y is an oxygen atom or a sulfur atom; Z is a hydroxyl group or a thiol group; and n is 1, 2 or 3.

4. A process according to claim 3 characterised in that as cross-linking agent there is used at least one of epichlorhydrin, 1-bromo-3,4-epoxybutane, 1-bromo-4,5-epoxypentane, 1-chloro-2,3-epithiopropane, 1-bromo-2,3-epithiopropane, 1-bromo-3,4-epithiobutane, 1-bromo-4,5-epithiopentane, 2,3-dibromopropanol, 2,4-dibromobutanol, 2,5-dibromopentanol, 2,3-dibromopropanethiol, 2,4-dibromobutanediol and 2,5-dibromopentanethiol.

5. A process according to claim 2, 3 or 4 characterised in that the etherifying agent used in step (b) is of the formula $Q—(CH_2)_m—COOH$, wherein Q is a chlorine or bromine atom and m is 1, 2 or 3.

6. Use of a cross-linked, carboxyalkylated and deacetylated derivative of chitin as claimed in claim 1 or as produced by a process as claimed in any one of claims 2 to 4 as an adsorbent material in the separation of saccharide from proteins, or of mixtures of proteins.

**Patentansprüche**

1. Vernetztes carboxyalkyliertes und deacetyliertes Chitin-Derivat
dessen Vernetzungsgrad 0,01 bis 0,3,
dessen Carboxyalkylierungsgrad 0,1 bis 0,9 und
dessen Deacetylierungsgrad 0,1 bis 1
beträgt.

2. Verfahren zum Herstellen einer vernetzten polymeren Substanz, gekennzeichnet durch
a) Vernetzen von natürlichem oder regeneriertem Chitin mit einem Vernetzungsmittel;
b) Carboxyalkylieren des vernetzten Chitins mit einem Veretherungsmittel, welches ein Halogenatom und eine Carboxylgruppe aufweist;
c) Deacetylieren des vernetzten carboxyalkylierten Chitins,
wobei eine vernetzte polymere Substanz mit
einem Vernetzungsgrad von 0,01 bis 0,3.
einem Carboxyalkylierungsgrad von 0,1 bis 0,9 und
einem Deacetylierungsgrad von 0,1 bis 1,0 erhalten wird.

3. Verfahren nach Anspruch 2, dadurch gekennzeichnet, daß das in Schritt (a) verwendete Vernetzungsmittel der Formel

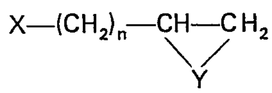

oder $X—(CH_2)_n—CHX—CH_2Z$ entspricht, worin bedeuten:
X ein Halogenatom;
Y ein Sauerstoff- oder Schwefel-Atom;
Z eine Hydroxyl- oder Thiol-Gruppe;
n die Zahl 1, 2 oder 3.

4. Verfahren nach Anspruch 3, dadurch gekennzeichnet, daß das verwendete Vernetzungsmittel wenigstens eines der nachfolgenden Stoffe ist:
Epichlorhydrin,
1-Brom-3,4-epoxybutan,
1-Brom-4,5-epoxybutan,
1-Chlor-2,3-epithiopropan,
1-Brom-2,3-epithiopropan,
1-Brom-3,4-epithiobutan,
1-Brom-4,5-epithiopentan,
2,3-Dibrompropanol,
2,4-Dibrombutanol,

2,5-Dibrompentanol,
2,3-Dibrompropanthiol,
2,4-Dibrombutanthiol,
2,5-Dibrompentanthiol.

5. Verfahren nach Anspruch 2, 3 oder 4, dadurch gekennzeichnet, daß das in Schritt (b) verwendete Veretherungsmittel der Formel

$$Q—(CH_2)_m—COOH$$

entspricht, worin bedeuten:
Q ein Chlor- oder Brom-Atom,
m die Zahl 1, 2 oder 3.

6. Verwendung eines vernetzten carboxyalkylierten und deacetylierten Chitin-Derivates nach Anspruch 1 oder hergestellt nach einem Verfahren gemäß irgendeinem der Ansprüche 2 bis 4 als Adsorptionsmaterial zur Trennung von Sacchariden und Proteinen oder von Protein-Mischungen.

**Revendications**

1. Dérivé réticulé, carboxyalkylé et désacétylé de chitine, ayant un degré de réticulation de 0,01 à 0,3, un degré de substitution par carboxylalkylation de 0,1 à 0,9, et un degré de désacétylation de 0,1 à 1.

2. Procédé de préparation d'une substance polymère réticulée, caractérisé par (a) la réticulation de chitine naturelle ou de chitine régénérée avec un agent de réticulation, (b) la carboxyalkylation de la chitine réticulée avec un agent éthérifiant ayant un atome d'halogène et un groupe carboxyle et (c) la désacétylation de la chitine carboxyalkylée réticulée, de manière à obtenir une substance polymère réticulée ayant un degré de réticulation de 0,01 à 0,3, un degré de substitution par carboxyalkylation de 0,1 à 0,9, et un degré de désacétylation de 0,1 à 1,0.

3. Procédé selon la revendication 2, caractérisé en ce que l'agent de réticulation utilisé dans l'étape (a) répond à la formule:

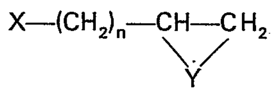 ou $X—(CH_2)_n—CHX—CH_2Z$

dans laquelle X est un atome d'halogène; Y est un atome d'oxygène ou un atome de soufre; Z est un groupe hydroxyle ou un groupe thiol; et n est égal à 1, 2 ou 3.

4. Procédé selon la revendication 3, caractérisé en ce qu'on utilise comme agent de réticulation au moins l'un des composés suivants: l'épichlorhydrine, le 1-bromo-3,4-époxybutane, le 1-bromo-4,5-époxypentane, le 1-chloro-2,3-épithiopropane, le 1-bromo-2,3-épithiopropane, le 1-bromo-3,4-épithiobutane, le 1-bromo-4,5-épithiopentane, le 23,-dibromopropanol, le 2,4-dibromobutanol, le 2,5-dibromopentanol, le 2,3-dibromopropanethiol, le 2,4-dibromobutanethiol et le 2,5-dibromopentanethiol.

5. Procédé selon la revendication 2, 3 ou 4, caractérisé en ce que l'agent éthérifiant utilisé dan l'étape (b) répond à la formule $Q—(CH_2)_m—COOH$, où Q est un atome de chlore ou de brome, et m est égal à 1, 2 ou 3.

6. Utilisation d'un dérivé réticulé, carboxy alkylé et désacétylé de chitine selon la revendication 1, ou produit par un procédé selon l'une quelconque des revendications 2 à 4 comme matière adsorbante dans la séparation des saccharides de protéines, ou de mélanges de protéines.